# EUROPEAN PATENT APPLICATION

(11) **EP 4 309 875 A1**
(43) Date of publication of application: **24.01.2024**
(21) Application number: 23186081.8
(22) Date of filing: 18.07.2023
(51) Int. Cl.: B29C 64/106, B29C 64/321, B33Y 70/10, B33Y 10/00, B33Y 30/00, D21H 11/00

(54) **PROCESS AND APPARATUS FOR ADDITIVE MANUFACTURING OF PAPER-BASED THREE-DIMENSIONAL OBJECTS**

(30) Priority: 20.07.2022 LU 502536
(71) Applicant: Technische Universität Hamburg, 21073 Hamburg (DE)
(72) Inventor: Bartsch, Katharina, 22419 Hamburg (DE); Bossen, Bastian, 22083 Hamburg (DE); Meyer, Christoph, 21244 Buchholz (DE); Herzog, Dirk, 21266 Jesteburg (DE); Emmelmann, Claus, 21220 Seevetal (DE)
(74) Representative: Stüven, Ralf

(57) **Abstract**

The invention relates to a process and apparatus for additive manufacturing of paper-based three-dimensional objects. The process of the invention comprises the steps of
a) Depositing, on a substrate (3), a layer of an extrudable fibrous cellulose material at predefined positions in an x-y plane, the fibrous cellulose material comprising cellulose fibers and at least one binding agent embedded in a matrix fluid, wherein the extrudable fibrous cellulose material is deposited by means of a nozzle (6) fluidly and flexibly connected to the outlet (42) of a screw extruder (4), the screw extruder (4) being arranged fixedly outside the x-y plane and, in a z-direction perpendicular to the x-y plane, spaced apart from the x-y plane, and the nozzle (6) being movable in the x-y plane for the deposition of the fibrous cellulose material,
b) Moving the substrate (3) with the layer deposited in step a) in a predefined increment in the z-direction, and
c) Repeating steps a) and b) until the three-dimensional object is manufactured,
wherein the process is computer-implemented.

## Description

The invention relates to a process and apparatus for additive manufacturing of paper-based three-dimensional objects.

Additive manufacturing (AM) or 3D printing is of growing importance not only in industry, but also in private or academic contexts, because of its geometric freedom and direct manufacturing from CAD files. Whereas metals are often used as a material for high-performance products, plastic materials are dominant in the prototyping or hobby area. A particular common process in the context of additive manufacturing using plastic materials is material extrusion of polymeric materials (MEX; see ISO/ASTM 52900-2015), in which a continuous filament of thermoplastic or composite material is melted and deposited at the desired location using a nozzle (see, for example, Maguire A., Pottackal N., Saadi M.A.S.R., Rahman M.M, Ajayan P.M., 2021, Additive manufacturing of polymer-based structures by extrusion technologies, Oxford Open Materials Science, Volume 1, Issue 1, 2021, itaa004, doi.org/10.1093/oxfmat/itaa004). In combination with a three-dimensional kinematics an object can be built up layer by layer.

The growing market of polymer-based additive manufacturing produces a growing amount of plastic waste products, for example, due to test-prints, misprints, no longer needed prototypes etc. The materials used, e.g., polylactide (polylactic acid, PLA) or acrylonitrile butadiene styrene (ABS) are difficult to recycle, such that specialized industrial recycling plants are often necessary, requiring a separate and laborious disposal.

There is an increasing demand for sustainable alternatives to plastic materials that can be used in additive manufacturing. The object of the invention is to provide such an alternative.

In one aspect the invention relates to a process for additive manufacturing of a paper-based three-dimensional object, the process comprising the steps of
a) Depositing, on a substrate, a layer of an extrudable fibrous cellulose material at predefined positions in an x-y plane, the fibrous cellulose material comprising cellulose fibers and at least one binding agent embedded in a matrix fluid, wherein the extrudable fibrous cellulose material is deposited by means of a nozzle fluidly and flexibly connected to the outlet of a screw extruder, the screw extruder being arranged fixedly outside the x-y plane and, in a z-direction perpendicular to the x-y plane, spaced apart from the x-y plane, and the nozzle being movable in the x-y plane for the deposition of the fibrous cellulose material,
b) Moving the substrate with the layer deposited in step a) in a predefined increment in the z-direction, and
c) Repeating steps a) and b) until the three-dimensional object is manufactured,
wherein the process is computer-implemented.

The process of the invention allows for an efficient and precise tool-free processing of paper-based materials. In many non-functional areas of tool-free processing in which strength properties are not that important, for example, in the field of model making or in the fields of education, research and development, paper-based materials are a suitable and sustainable alternative to the common plastic materials used today. Additive manufacturing of paper fiber-based materials offers the particular advantage that the raw material is based on renewable or recycled materials, and can easily be disposed of or recycled. Further, using paper-based material is potentially a more cost-effective alternative to conventional additive manufacturing of plastics. Especially when used by children, it is also an advantage that hot plastic melt does not have to be used.

In the process of the invention, an extrudable fibrous cellulose material is deposited on a substrate to manufacture a three-dimensional object. The process of the invention may thus be considered a 3D printing process using extrudable fibrous cellulose material. In the process of the invention, a fibrous cellulose material is deposited in a precise and reliable manner. The process provides, for example, for a screw extruder conveying the fibrous cellulose material to a nozzle through which the fibrous cellulose material is deposited on the substrate. The screw extruder is not arranged on movable parts, and is thus not moved itself to deposit the fibrous cellulose material on the substrate. Rather, the screw extruder is flexibly connected to the nozzle, which in turn is movable. The nozzle has a lower mass compared to the screw extruder, avoiding the problem that the movement of a higher mass is harder to control precisely and may produce printing errors.

The process of the invention is computer-implemented, i.e., the steps for the manufacturing of a three-dimensional paper-based object, in particular steps a and b, are computer-implemented. The manufacturing of the three-dimensional paper-based object is thus fully automated.

During each cycle of deposition (step a) and movement of the substrate (step b), a layer of fibrous cellulose material is deposited on the substrate and/or the previous layer(s). The paper-based three-dimensional object will thus be manufactured layer by layer, in a fully automated manner.

The term "fibrous cellulose material" refers to a material containing cellulose fibers, for example, paper.

The term "extrudable" in relation to the fibrous cellulose material refers to a flowable fibrous cellulose material that can be extruded with an extruder, e.g., a screw extruder. An extrudable fibrous cellulose material may be a paper-based material where cellulose fibers are embedded in a suitable matrix fluid, e.g., water. An example of an extrudable fibrous cellulose material is a paper pulp having suitable properties, e.g., in respect to viscosity and homogeneity, making it suitable to be extruded with an extruder, for example a screw. A screw extruder is a type of mixer which mixes components to be mixed while moving the mixture through a cylinder using a screw turning around its longitudinal axis.

The term "x-y plane" refers to a two-dimensional plane extending in an x-direction and an y-direction, the x- and y-direction being orthogonal to each other.

The term "nozzle" refers to an element having an opening through which a fluid, e.g., a gas or liquid, can be directed in a controlled manner. The term "nozzle" is thus not to be construed as only referring to an opening per se.

The term "direction of gravity" refers to the direction of the gravitational field of the earth. Unless explicitly stated otherwise or unless the context clearly indicates otherwise, the term is not to be construed as meaning an exclusive reference to a direction pointing to the earth, i.e., in the direction of gravity, i.e., the gravitational field of the earth, but includes a direction against the direction of the gravitational field.

The term "z-direction" is used herein as a reference to a direction perpendicular to the x-y plane. In case the x-y plane is horizontal, the z-direction corresponds to the direction of gravity, i.e., a direction in the direction of the gravitational field or against the direction of the gravitational field. The terms "vertical" or "vertically" may be used in relation to a direction in z-direction, in particular in case the z-direction corresponds to the direction of gravity. The term "above" is used herein in relation to a position of a first element relative to the position of a second element in relation to the z-direction, in particular if the z-direction corresponds to the direction of gravity. The term "in z-direction spaced apart from the x-y-plane" may also be used in relation to a position of a first element relative to the position of a second element in relation to the z-direction, in particular in a more general manner, i.e., if the z-direction is not confined to the direction of gravity.

The term "CoreXY design" refers to a 3D printer system comprising a specific motion system for movements in x- and y-direction using a single continuous belt for both axes (see, for example, Avdeev, A. R., Shvets, A. A., Torubarov, I. S. (2020), Investigation of Kinematics of 3D Printer Print Head Moving Systems, in: Radimov, A. A. et al. (eds.) Proceedings of the 5th International Conference on Industrial Engineering (ICIE 2019), Lecture Notes in Mechanical Engineering, doi: 10.1007/978-3-030-22041-9_50; Sollmann, K, Jouaneh, M., Lavender, D. (2010), Dynamic Modeling of a Two-Axis, Parallel, H-Frame-Type XY Positioning System, IEEE/ASME Transactions on Mechatronics, 15, 280-290, doi:10.1109/TMECH.2009.2020823; Amridesvar S., Balakrishnan, S., Akash. S., Muthu G., Vignesh K. P., 2020, Modeling phase distribution in build platform for better printing in FDM machine, IOP Conf. Ser.: Mater. Sci. Eng. 988 012047). The design requires only two stepper motors remaining in static position for x-y motion, and provides a means of moving both axes independently or simultaneously.

The term "funnel or funnel system" as used herein refers to a funnel or a system comprising or consisting of at least one funnel. The funnel or funnel system is designed to convey fibrous cellulose material, for example, a paper pulp, to the inlet of the screw extruder.

The fibrous cellulose material comprises a matrix fluid, cellulose fibers and at least one binding agent. The term "paper pulp" will synonymously be used for such a material. The matrix fluid can be water or alcohol (ethanol), for example, or a mixture of water and alcohol. Preferably the matrix fluid is water.

The cellulose fibers may be cotton fibers, or cellulose fibers from other plants. The presence of lignin fibers or hemi-cellulose fibers is not excluded. The fibers can, for example, range in length from 1-4 mm and in diameter from 15 - 40 µm. A mixture of different fiber lengths is not excluded and may be beneficial for optimal process characteristics and part quality. The fiber amount in the extrudable mass preferably exceeds 60 percent by mass.

The binding agent may be any suitable binding agent or composition of binding agents, for example, starch, starch derivatives, methyl cellulose or polyvinyl alcohol. Biocompostable binders are preferred, however other binding agents not excluded. A preferred binding agent is methyl cellulose.

A fibrous cellulose base material useful in the method of the invention and containing methyl cellulose as binding agent can, for example, have the following composition:
70-80 wt.% cellulose fibers (fine/short)
10-20 wt.% methylcellulose
0-5 wt.% additives such as paraffin oil, kaolin or talcum for binding of dust.

The base material can, for example, be mixed in a ratio between 1: 1,5 to 1:4 with water as matrix fluid for an optimal viscosity for extrusion and form stability. The ratio depends on the nozzle diameter, larger nozzles requiring less water, whereas smaller nozzles are used with a higher amount of water.

At least the cellulose fibers and the binding agent(s), and optionally further ingredients (see below) are mixed with the matrix fluid, preferably in a ratio of 1:1.5 to 1:4 (cellulose fibers plus binding agent(s) : matrix fluid) in order to produce an extrudable mass. The mixing process can be conducted at elevated temperatures to increase homogeneity. It is particularly preferred to produce an extrudable mass having high homogeneity, which also persists through shearing forces, and a viscosity in the range between 10² and 10⁶ Pa · s. Depending on the desired resolution and mass composition, a preferable nozzle diameter can range from 0.4 -2.0 mm, further preferred 0.5 - 2.0 mm or 0.8 -1.5 mm.

The fibrous cellulose material may further optionally include filling agents like kaolin, talcum etc., oils like paraffin oil or edible oil for the binding of dust, coloring agents or other ingredients like preservatives of emulsifiers.

In a preferred embodiment, the process according to the invention further includes the step of drying the fibrous cellulose material after each deposition step by means of infrared radiation or hot air. The drying process may be brought about by of an element or device attached to or moved together with or along with the nozzle. It is, however, also possible that a heating element, e.g., a fan or IR lamp, is fixedly attached to a structure holding the substrate or to the extruder.

In a further embodiment, in particular in a case where the fibrous cellulose material contains a photoreactive binding agent, i.e., a binding agent that hardens under UV light, the process according to the invention further includes the step of curing the fibrous cellulose material after each deposition step by means of UV radiation. This may also be combined with a drying process as described above.

In a further preferred embodiment of the process of the invention, the screw extruder is configured to be operated continuously. This embodiment is advantageous for a fast and uninterrupted production of the product. In this embodiment, the feeding of the extrudable fibrous cellulose material to the extruder is automated.

In a further preferred embodiment of the process of the invention, the screw extruder is fluidly connected to a funnel or funnel system feeding extrudable fibrous cellulose material to the screw extruder by gravity. In an embodiment, wherein the screw extruder is configured to be operated continuously, the funnel or funnel system is preferably also supplied with extrudable fibrous cellulose material in a continuous manner.

Preferably, the screw extruder is fluidly connected to the nozzle by a flexible tube. The tube is hollow and can be made of any suitable material, e.g., a plastic material like silicone. It is preferred that the tube material is of a material inert to any ingredient of the fibrous cellulose material. The tube has a sufficient length to be able to follow the nozzle to every accessible point in x- and y-direction. The tube and/or the nozzle can optionally be heated.

In a further preferred embodiment of the process of the invention the flexible tube and/or the nozzle are flushed with a flushing fluid, preferably water, after one or more repetitions of steps a and b of the process, or after the three-dimensional object is manufactured. Preferably, this flushing step is also automated. In this embodiment, the tube and/or the nozzle are cleared of any fibrous cellulose material to avoid clogging. The flushing step can also include the flushing of the screw extruder and/or the funnel or funnel system.

In a preferred embodiment of the process according to the invention, the x-y plane is a horizontal plane, and the z-direction is perpendicular to the x-y plane and in or against the direction of gravity. This does not exclude, that the x-y plane can be temporarily pivoted or tilted relative to the horizontal plane during the process.

In a further aspect, the invention also relates to an apparatus for additive manufacturing of a paper-based three-dimensional object, comprising
a) a three-dimensional frame structure extending in an x-, y- and z-direction, the x-, y- and z-direction being orthogonal to each other,
b) a substrate held by and within the frame structure, the substrate being movable in z-direction in relation to the frame structure,
c) a screw extruder, the screw extruder being fixedly arranged on the frame structure in z-direction above the substrate,
d) a funnel or funnel system being fluidly connected to the inlet of the screw extruder, and
e) a nozzle, wherein the nozzle is directed to the substrate, is fluidly connected to the outlet of the screw extruder via a flexible tube, and is movably arranged on a movable axis being supported by the frame structure and arranged in z-direction above the substrate, such that the nozzle is movable in x- and y-direction in relation to the frame structure.

The apparatus of the invention is a 3D printing device being configured to manufacture paper-based three-dimensional object.

Preferably, the frame structure is essentially cuboid or cube-shaped. Further preferred, the apparatus is in CoreXY design, such that the nozzle is moved in x- and y-direction using a CoreXY system. Such a design avoids, for example, the disadvantages of 3D printers in cantilever design, e.g., the movement of a comparatively large and heavy mass. Furthermore, the rigidity of CoreXY systems allows installing the screw extruder on the frame without influencing the movement of the axes.

In a preferred embodiment, the flexible tube and/or the nozzle are heatable.

Further preferred, the apparatus comprises a heating element being movably arranged on the movable axis. Such a heating element can be separate from the nozzle or attached to the nozzle in order to move the heating element independently from the nozzle or together with the nozzle on the axis. The heating element may alternatively be fixedly arranged on the frame structure. The heating element can be used to dry the fresh layer of fibrous cellulose material after each deposition step. The heating element can be a source of infrared radiation or hot air, for example.

In a further embodiment, in particular in a case where the fibrous cellulose material contains a photoreactive binding agent, i.e., a binding agent that hardens under UV light, the apparatus according to the invention further includes a source of ultraviolet radiation, e.g., a UV lamp, for curing the fibrous cellulose material after each deposition step by means of UV radiation. The apparatus of the invention may comprise such a source of UV radiation alternatively to or in addition to a heating element. The source of UV radiation can, for example, be arranged movable on the movable axis, or fixedly on the frame structure.

In a preferred embodiment, the substrate has a planar surface extending in the x-y plane, the x-y plane preferably being arranged horizontally. This does not exclude, that the substrate is supported in a manner that the x-y plane can be at least temporarily pivoted or tilted relative to the horizontal plane.

In a preferred embodiment, the substrate is easily exchangeable to minimize downtime between prints and maximize productivity. This can be done manually or automatically. Preferably, the substrate is exchanged automatically, e.g., using a robot arm, or by means of a suitable other construction. For example, the apparatus of the invention may be configured to have two or more substrates held by and within the frame structure. Further, the apparatus can be configured to be able to automatically move a first substrate that is to be exchanged for a second substrate in z-direction to a first resting place, e.g., a place at the bottom of the apparatus, and to automatically move the second substrate from a storage position, e.g., a position at the top of the apparatus. In this embodiment, the apparatus of the invention is advantageously designed in such a way that it has a resting position for the movable axis, i.e., a position into which the movable axis can be moved, and which is outside the area in which the second substrate is moved.

The apparatus of the invention is automated in that at least the movement of the substrate in z-direction and the nozzle in x-y-direction are computer-implemented. The apparatus can, for example, be equipped with suitable electronics, e.g., a processor and other necessary electronic parts, that can be programmed, for example, via a Personal Computer, in order to enable the 3D printing of different paper-based three-dimensional objects.

In the following, the invention will be described in further detail by way of example only with reference to the accompanying figures.

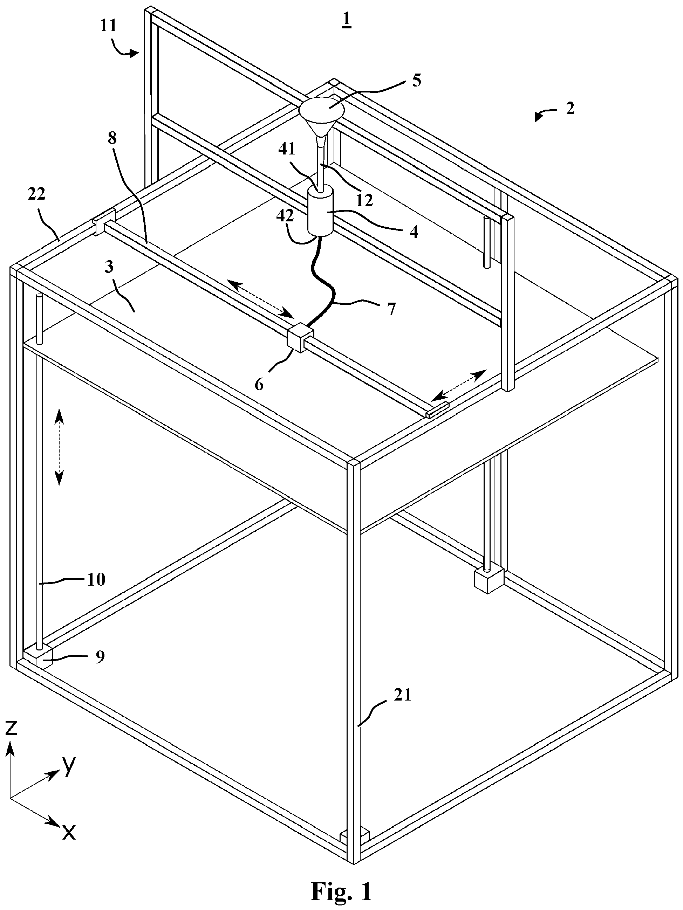

Figure 1. Isometric view of a simplified embodiment of an apparatus of the invention.

Figure 1 shows an isometric drawing of a simplified embodiment of an apparatus 1 of the invention. The apparatus 1 comprises an essentially cuboid frame structure 2, for example made of a suitable metal or plastic material. The frame structure 2 comprises vertical frame bars 21 and horizontal frame bars 22. A substrate (print bed) 3 is movably arranged within the frame structure 2. The substrate 3 can be moved in z-direction via stepper motors 9 and vertical threaded bars 10.

A nozzle 6 is arranged on an axis 8 supported by the frame structure 2. The axis 8 is arranged vertically above the substrate 3 and can be moved in y-direction. The nozzle can be moved in x-direction on the axis 8. The movement of the nozzle in x-y-direction is accomplished via two stepper motors and a belt system according to the CoreXY design (not shown).

A funnel or funnel system 5 and a screw extruder 4 are arranged on a support structure 11. The funnel or funnel system 5 is fluidly connected, e.g., via a tube or pipe 12, with the inlet 41 of the screw extruder 4. The outlet 42 of the screw extruder 4 is fluidly connected to a flexible tube 7. It should be noted that, for reasons of simplicity and a better overview, the flexible tube 7 is not drawn in the figure with sufficient length. The flexible tube 7 will, however, have a sufficient length to be able to follow the nozzle to every accessible point above the substrate 3 in x- and y-direction. For this purpose, additional redirection elements like pulleys or the like (not shown) can, for example, be provided. The screw extruder 4 is arranged vertically above the nozzle 6. Further, the funnel or funnel system 5 is arranged vertically above the screw extruder 4, such that the fibrous cellulose material can be fed to the screw extruder 4 by gravity.

The apparatus 1 is fully automated, at least as regards the movement of the axis 8, the nozzle 6, and the substrate 3, and preferably also as regards the operation of the screw extruder 4.

## Claims

1. A process for additive manufacturing of a paper-based three-dimensional object, the process comprising the steps of
a) Depositing, on a substrate (3), a layer of an extrudable fibrous cellulose material at predefined positions in an x-y plane, the fibrous cellulose material comprising cellulose fibers and at least one binding agent embedded in a matrix fluid, wherein the extrudable fibrous cellulose material is deposited by means of a nozzle (6) fluidly and flexibly connected to the outlet (42) of a screw extruder (4), the screw extruder (4) being arranged fixedly outside the x-y plane and, in a z-direction perpendicular to the x-y plane, spaced apart from the x-y plane, and the nozzle (6) being movable in the x-y plane for the deposition of the fibrous cellulose material,
b) Moving the substrate (3) with the layer deposited in step a) in a predefined increment in the z-direction, and
c) Repeating steps a) and b) until the three-dimensional object is manufactured,
wherein the process is computer-implemented.

2. The process according to claim 1, further including the step of drying and/or curing the extrudable fibrous cellulose material after each deposition step by means of infrared radiation, hot air or UV radiation.

3. The process according to one of claims 1 or 2, wherein the screw extruder (4) is configured to be operated continuously.

4. The process according to one of claims 1 to 3, wherein the screw extruder (4) is fluidly connected to a funnel or funnel system (5) feeding extrudable fibrous cellulose material to the screw extruder (4) by gravity.

5. The process according to one of the preceding claims, wherein the matrix fluid is water.

6. The process according to one of the preceding claims, wherein the screw extruder (4) is fluidly connected to the nozzle (6) by a flexible tube (7).

7. The process according to one of the preceding claims, wherein, after one or more repetitions of steps a and b, or after the three-dimensional object is manufactured, the flexible tube (7) and/or the nozzle (6) are flushed with a flushing fluid, preferably water.

8. The process according to one of the preceding claims, wherein the x-y plane is a horizontal plane, and the z-direction is perpendicular to the x-y plane and in or against the direction of gravity.

9. An apparatus (1) for additive manufacturing of a paper-based three-dimensional object, comprising
a) a three-dimensional frame structure (2) extending in an x-, y- and z-direction, the x-, y- and z-direction being orthogonal to each other,
b) a substrate (3) held by and within the frame structure (2), the substrate (3) being movable in z-direction in relation to the frame structure (2),
c) a screw extruder (4), the screw extruder (4) being fixedly arranged on the frame structure (2) in z-direction above the substrate (3),
d) a funnel or funnel system (5) being fluidly connected to the inlet (41) of the screw extruder (4), and
e) a nozzle (6), wherein the nozzle (6) is directed to the substrate (3), is fluidly connected to the outlet (42) of the screw extruder (4) via a flexible tube (7), and is movably arranged on a movable axis (8) being supported by the frame structure (2) and arranged in z-direction above the substrate (3), such that the nozzle (6) is movable in x- and y-direction in relation to the frame structure (2).

10. The apparatus (1) according to claim 9, wherein the frame structure (2) is essentially cuboid or cube-shaped.

11. The apparatus (1) according to one of claims 9 or 10, wherein the apparatus (1) is in CoreXY design.

12. The apparatus according to one of claims 9 to 11, wherein the flexible tube (7) and/or the nozzle (6) are heatable.

13. The apparatus according to one of claims 9 to 12, wherein the apparatus (1) comprises a heating element being movably arranged on the movable axis (8).

14. The apparatus according to one of claims 9 to 13, wherein the substrate (3) has a planar surface extending in the x-y plane, the x-y plane preferably being arranged horizontally.
